# EUROPEAN PATENT SPECIFICATION

(11) **EP 1 826 434 B1**
(45) Date of publication and mention of the grant of the patent: **18.03.2009**
(21) Application number: 06025607.0
(22) Date of filing: 11.12.2006
(51) Int. Cl.: F16D 27/00

(54) **Clutch actuator**
Kupplungsbetätigungsvorrichtung
Actionneur d'embrayage

(30) Priority: 18.04.2006 JP 2006114705; 24.02.2006 JP 2006048086
(43) Date of publication of application: 29.08.2007
(73) Proprietor: Yamaha Hatsudoki Kabushiki Kaisha, Iwata-shi, Shizuoka 438-8501 (JP); Kabushiki Kaisha Moric, Shuchi-gun, Shizuoka-ken (JP)
(72) Inventor: Kosugi, Makoto, Iwata-shi Shizuoka-ken 438-8501 (JP); Kazuta, Hisashi, Iwata-shi Shizuoka-ken 438-8501 (JP); Takeuchi, Yoshihiko, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 156 240
- EP-A2- 1 365 176
- DE-A1- 4 336 445
- JP-A- 2005 282 784
- US-A1- 2005 120 819

## Description

The present invention relates to a clutch actuator. Such a clutch actuator disengages and engages a clutch. Furthermore, it is also discussed an engine unit including the clutch actuator, and a saddle-type vehicle like a motorcycle that includes the engine unit. A clutch actuator is known from the prior art document JP-A-2005-282784 (Patent Document 1). Said clutch actuator comprises a motor, a worm shaft that rotates with the motor, and a worm wheel that meshes with the worm shaft. A crank shaft is provided with a crank member that rotates in accordance with the rotation of the worm wheel and a crank arm is provided on the crank shaft member at a distance spaced apart from the worm wheel. An output rod is attached to the crank arm. Said crank shaft is supported by bearing parts at the ends thereof. Thus, the worm wheel and the crank arm are arranged between said bearings.

Conventionally, a system is known that includes an actuator attached to a manual transmission and that automatically performs a series of start, stop and shift change operations (clutch disengagement, gear change, and clutch engagement) based on the rider's intention or the state of the vehicle.

Amongst the actuators used in the above described system, one known example of a clutch actuator for disengaging-engaging the clutch is the clutch actuator, disclosed in Patent Document 1. This clutch actuator is provided with a motor, and a worm shaft that rotates coaxially with a motor shaft of the motor. A tip of the worm shaft is formed with a threaded section. In addition, the clutch actuator includes a worm wheel that meshes with the threaded section; a crank shaft (a sub-wheel and a shaft member of the worm wheel) that converts rotational motion of the worm wheel to linear reciprocating motion; and an output rod that is connected to the crank shaft. The clutch actuator finally converts the rotational motion of the motor to axial direction reciprocating motion of the output rod, and uses the reciprocating motion of the output rod to disengage-engage the clutch. Further, the clutch actuator includes an assist spring that is connected to a shaft member of the crank shaft (the shaft member of the worm wheel).

Patent Document 1: JP-A-2005-282784

When the clutch actuator disclosed in the above Patent Document 1 is viewed from the axial direction of the shaft member of the crank shaft (the shaft member of the worm wheel), the motor and the output rod are arranged to face in substantially the same direction, thereby allowing the size reduction of the structure to be promoted (refer to Fig. 3 of Patent Document 1). However, in order to achieve this arrangement, the space between the worm wheel (namely, a crank arm to which the motor is connected via the worm shaft) and the sub-wheel (namely, a crank arm to which the output rod is connected) has to be made larger so that the motor and the output rod do not interfere. Accordingly, a shaft member that connects the worm wheel and the sub-wheel (namely, a crank shaft member that connects the pair of crank arms) has to be made longer.

Therefore, in the above clutch actuator, the shaft member that connects the worm wheel and the sub-wheel is made longer, and an assist spring is disposed between the worm wheel and the sub-wheel (refer to Fig. 4 of Patent Document 1). As a result, the shaft member is long, and in order to dispose the assist spring at the shaft member, the shaft member must have comparatively high strength. Thus, in order to increase rigidity of the clutch actuator, the shaft member is formed thicker.

However, because the shaft member is formed thicker, the attachment radius of the output rod (the distance from the center of the shaft member to the point where the output rod is attached) becomes larger, whereby the actuator becomes bigger. Further, because the attachment radius of the output rod is large, the rotation angle that the crank shaft is required to rotate in order to move the output rod the same stroke is smaller, and thus the rotation angle of the worm wheel is smaller. Accordingly, when the disengagement-engagement operation of the clutch is performed, the necessary motor rotation angle is smaller.

However, when the disengagement-engagement operation of the clutch is performed, in order to accurately control drive of the worm wheel, it is necessary to ensure, to some extent, a large maximum rotation angle of the motor. Thus, it is necessary to adopt a design in which the diameter of the worm wheel is larger, and the reduction ratio between the worm shaft and the worm wheel is larger.

However, if the diameter of the worm wheel is made larger, the actuator unavoidably becomes larger, and in addition, weight is also increased. Further, if the reduction gear ratio is larger, the operation of the output rod does not rapidly follow the rotation of the motor, and thus responsiveness of the clutch engagement-disengagement operation is worsened.

As a result of the above, the conventional clutch actuator has a larger structure, increased weight, and worsened responsiveness of the clutch engagement-disengagement operation. Further, this type of clutch actuator is less suitable for a saddle-type vehicle like a motorcycle.

Prior art document EP 1 365 176 A2 teaches a clutch actuator having a motor which drives a shaft. Said shaft is provided with a worm gear. Said worm gear is in mesh with a worm wheel. Said worm wheel is provided with central support or bearing portions. Said worm wheel supports a pin, which further supports a connecting rod in order to convert the rotational movement of the worm wheel into a linear movement transmitted to the output side.

The further prior art documents US 200510120819 A1 and EP 1 156 240 A1 refer to an oscillating actuator and an electric drive device for a transmission, respectively. Hence, said documents do not teach a clutch actuator. Said further prior art actuating means teach a drive motor connected to a shaft having a gear arranged between a pair of bearings. Said gear is in mesh with a gear of some kind of crank arm section, wherein the gearing means of said crank arm is also supported by a pair of bearings. At a free end of said shaft, a crank arm having a crank pin is provided for actuating a device. Hence, said further prior art documents teach a bearing arranged between the gear and the crank arm in combination with a further bearing arranged such that the respective gear is arranged between the bearings.

The invention takes into consideration the above described problems, and it is an object thereof to provide a clutch actuator, an engine unit including the clutch actuator, and a saddle-type vehicle including the engine unit that can restrict increase in structure size and weight, and improve the responsiveness of the clutch disengagement-engagement operation.

According to the present invention said object is solved by a clutch actuator having the features of independent claim 1. Preferred embodiments are laid down in the dependent claims. Furthermore, said object is also solved by an engine unit and saddle-type vehicle provided with such a clutch.

Accordingly, it is provided a clutch actuator for disengaging and engaging a clutch of a saddle-type vehicle, said clutch actuator comprising: a motor; a worm shaft which rotates with the motor; a worm wheel that meshes with the worm shaft; a crank shaft, said crank shaft having a crank shaft member that rotates in accordance with rotation of the worm wheel, and a crank arm that is provided on the crank shaft member at a distance apart from the worm wheel; and an output rod attached to the crank arm, wherein the crank shaft member of the crank shaft is supported by a first bearing provided between the worm wheel and the crank arm.

Preferably, the worm wheel is fixed to the crank shaft member of the crank shaft such that the worm wheel is coaxial with the crank shaft member of the crank shaft and is parallel with the crank arm.

According to another preferred embodiment, the clutch actuator further comprises a second bearing that supports the crank shaft, wherein the second bearing is disposed such that the crank arm is positioned between the first bearing and the second bearing.

Preferably, the first bearing and/or the second bearing are respectively ball bearings.

Further, preferably the crank arm includes a pair of arm sections positioned to face each other, and a crank pin that couples together the arm sections, wherein the output rod is attached to the crank pin, and wherein, when viewed from an axial direction of the crank shaft member of the crank shaft, a section of the crank pin overlaps with the crank shaft member.

According to a further preferred embodiment, the clutch actuator further comprises an assist spring, attached to the crank arm, wherein the assist spring assists rotation of the crank shaft.

Preferably, one end of the crank shaft member of the crank shaft is cantilever supported by the first bearing, and wherein the worm wheel is attached to this cantilever supported end of the crank shaft member of the crank shaft.

According to yet another preferred embodiment, the clutch actuator further comprises a rotation angle sensor that detects a rotation angle of the crank shaft.

Preferably, the second bearing has a smaller diameter than the first bearing.

Still further, preferably there is provided an engine unit comprising an engine; a clutch that disengages and engages transmission of driving force of the engine; and the clutch actuator according to one of the above embodiments, and a saddle-type vehicle having such an engine unit.

In following, the present invention is explained in greater detail with respect to several embodiments thereof in conjunction with the accompanying drawings, wherein:
- Fig. 1: is a side view of a motorcycle according to an embodiment,
- Fig. 2: shows the state in which various structural members of an automatic transmission control device are attached,
- Fig. 3: shows the state in which various structural members of the automatic transmission control device are attached,
- Fig. 4: shows the state in which various structural members of the automatic transmission control device are attached,
- Fig. 5: shows the state in which various structural members of the automatic transmission control device are attached,
- Fig. 6: shows the shows the state in which various structural members of the automatic transmission control device are attached,
- Fig. 7: is a cross sectional view of the internal structure of an engine,
- Fig. 8: is an outline view of a shift actuator, a shift rod, and a shift mechanism,
- Fig. 9: is a side view of the sift actuator, the shift rod, and the shift mechanism,
- Fig. 10: is an outline view of a clutch actuator,
- Fig. 11: is a side view of the clutch actuator,
- Fig 12: is a cross sectional view along line A-A of Fig. 11,
- Fig. 13: is a cross sectional view along line B-B of Fig. 11,
- Fig. 14: is an enlarged cross sectional view of a fitting portion of a motor shaft and a worm shaft,
- Fig. 15: is an enlarged view of a section of the worm shaft in which a threaded section is formed,

- Fig. 16: is a perspective view of a switch section of a handle grip, and
- Fig. 17: illustrates the system of the automatic transmission control device.

Description of the Reference Numerals and Signs:
- 1: Motorcycle (saddle-type vehicle)
- 20: Engine
- 60: Clutch actuator (clutch actuator)
- 60a: Clutch motor (motor)
- 60b: Motor shaft
- 103: Worm shaft
- 103c: Threaded section
- 105: Worm wheel
- 106: Motor bearing
- 108: Bearing
- 110: Crank shaft
- 111: Crank shaft member
- 112: Crank pin
- 113: Arm section
- 114: Crank arm
- 117: Bearing (first bearing
- 118: Bearing (second bearing)
- 120: Output rod

Hereinafter, an embodiment will be explained in detail with reference to the drawings.

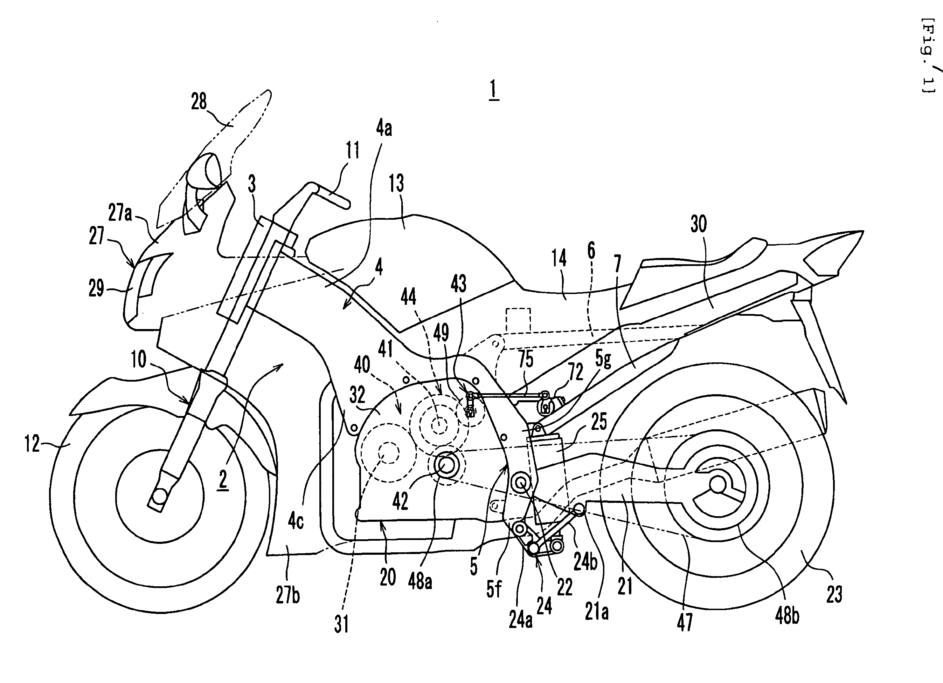

Fig. 1 is a side view of a motorcycle 1 according to the present embodiment. As can be seen from Fig. 1, the motorcycle 1 according to the embodiment is provided with a head tube 3 and a body frame 2. The body frame 2 includes, at the least, a main frame 4 that extends rearward from the head tube 3, and a rear arm bracket 5 that extends downwards from a rear section of the main from 4. The main frame 4 has two frame sections 4a that extend in the left-right rearward direction from the head tube 3 (only one of these is shown in Fig. 1). A rear section of the frame section 4a is connected to the downwardly-extending rear arm bracket 5.

A front fork 10 is pivotably supported by the head tube 3. A steering handlebar 11 is provided at an upper end of the front fork 10, and a front wheel 12 is provided at a lower end of the front fork 10. A fuel tank 13 is provided in an upper section of the main frame 4, and a seat 14 is provided to the rear of the fuel tank 13. The seat 14 is mounted on a seat rail 6.

An engine 20 is suspended by the main frame 4 and the rear arm bracket 5. The engine 20 is supported by an engine attachment section 4c and the frame section 4a of the main frame 4, and is also supported by an engine attachment section (not shown) of the rear arm bracket 5. Note that, the engine 20 is not limited to being an internal combustion engine like a gasoline engine, and may be a motor engine, or the like. Further, the engine may combine a gasoline engine and a motor engine.

A front end of a rear arm 21 is supported via a pivot shaft 22 in the rear arm bracket 5 so as to be capable of rocking upward and downward. A rear wheel 23 is supported by a rear end of the rear arm 21. The rear arm 21 is supported by the body frame 2 via a link mechanism 24 and a rear cushion unit 25. The link mechanism 24 has a body side link 24a and a rear arm side link 24b. One end of the body side link 24a is rotatably coupled to a link attachment section 5f of the rear arm bracket 5. One end of the rear arm side link 24b is rotatably coupled to a link attachment section 21a of the rear frame 21. In addition, a central section of the body side link 24a and the other end of the rear arm side link 24b are rotatably coupled. A lower section of the rear cushion unit 25 is supported by the other end of the body side link 24a, and an upper section of the rear cushion unit 25 is supported by a cushion attachment section 5g. The rear cushion unit 25 is disposed to the rear of the rear arm bracket 5.

Further, a cowling 27 is provided on the body frame 2. The cowling 27 includes an upper cowling 27a that covers an area forward of the steering handlebar 11, and a lower cowling 27b that covers forward and to the left and right sides of the main frame 4 and to the left and right sides below the engine 20. Note that, the upper cowling 27a is supported by the main frame 2 via a stay, now shown. The upper cowling 27a forms a front surface and both side surfaces in the left and right directions of a body front section. Further, a screen 28 and a head lamp 29, which is made from transparent material, etc. are attached to the upper cowling 27a and positioned at an upper section of the body front. A side cover 30 is disposed on a back stay 7 so as to cover in the left-right side direction of the seat 14 and to cover above the rear wheel 23.

Although the type of engine to be used is not limited, in this embodiment, the engine 20 is a liquid cooled, parallel 4-cycle, 4-cylinder engine. The engine 20 is disposed such that the cylinder axis (not shown) lies in the body forward direction and is slightly inclined from the horizontal. A crank case 32 that houses a crank shaft 31 is suspended from and supported by the body frame 2 at both sides in the vehicle width direction.

Further, the engine 20 is provided with a transmission 40. The transmission 40 includes a main shaft 41 positioned parallel to the crank shaft 31; a drive shaft 42 that is positioned parallel to the main shaft 41; and a shift mechanism 43 that includes multi-speed gears 49. The transmission 40 is integrally assembled with the crank case 32. The clutch mechanism 44 disengages and engages transmission of rotation when the gears 49 are switched.

The drive shaft 42 is provided with a drive sprocket 48a, and a chain 47 is wound around this drive sprocket 48a and a driven sprocket 48b provided on the rear wheel 23. Accordingly, engine power is transmitted to the rear wheel 23 via the chain 47.

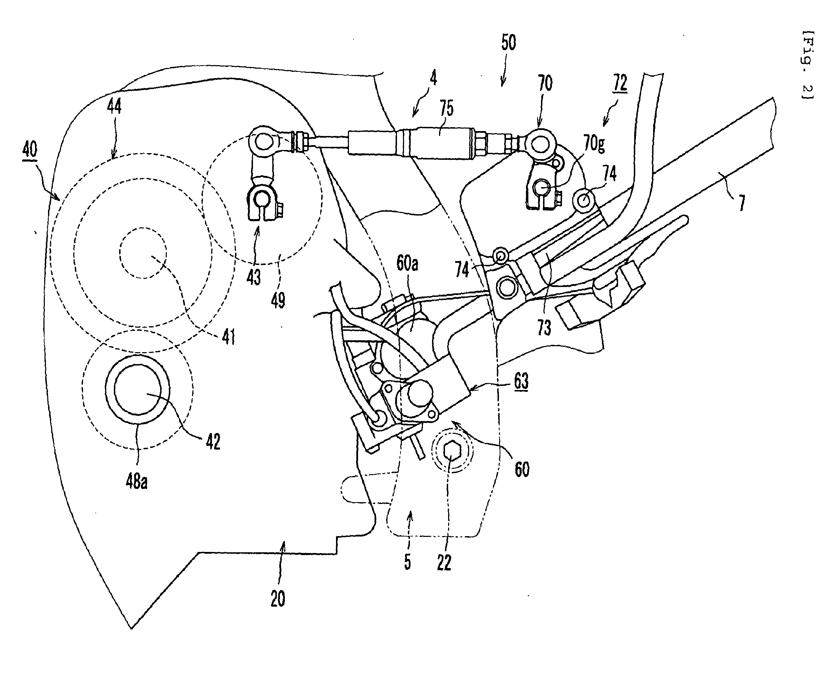

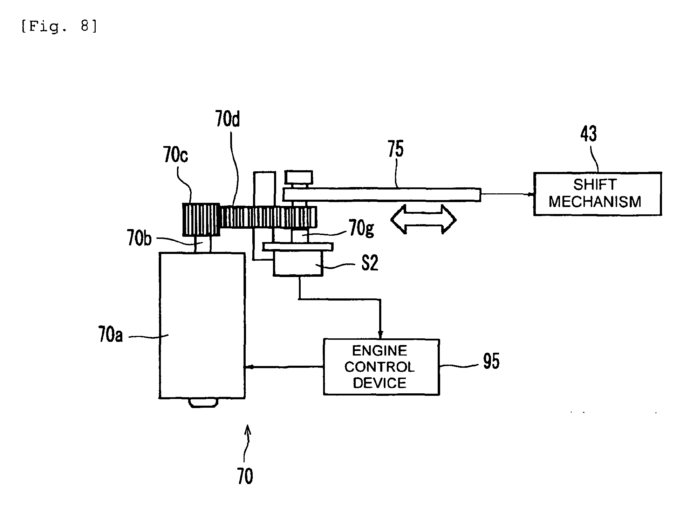

Next, an automatic transmission control device 50 provided in the motorcycle 1 will be described. Fig. 2 to Fig. 6 show the state in which the various structural members of the automatic transmission control device 50 are attached. As is apparent from Fig. 2, the automatic transmission control device 50 automatically disengages and engages the clutch mechanism 44 and switches the gears of the transmission 40. The automatic transmission control device 50 includes a clutch actuator 60 that drives the clutch mechanism 44; a shift actuator 70 that switches the gears of the transmission 40; and an engine control device 95 (not shown in Fig. 2; refer to Fig. 8) that controls drive of the clutch actuator 60 and the shift actuator 70.

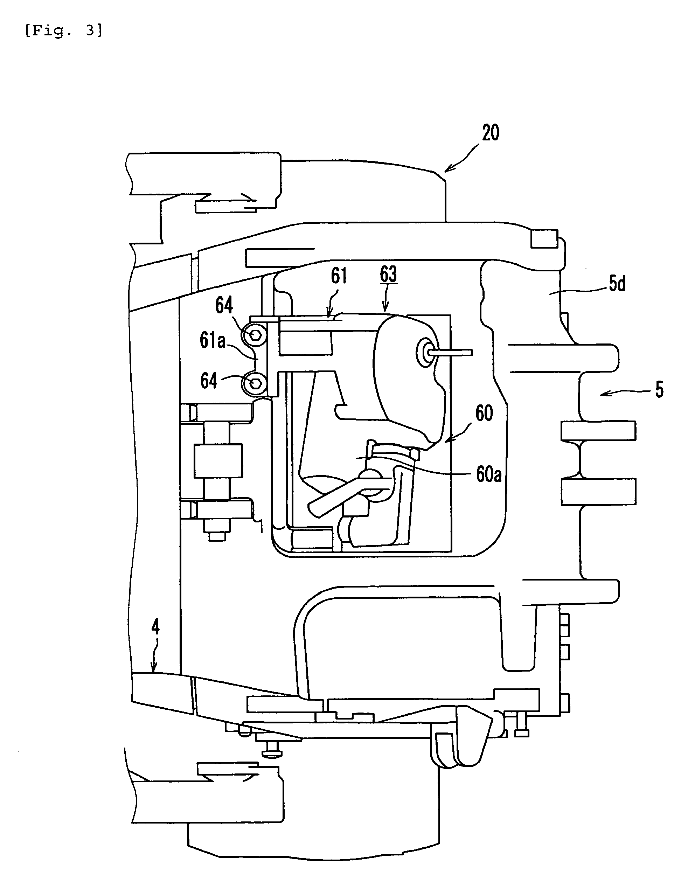

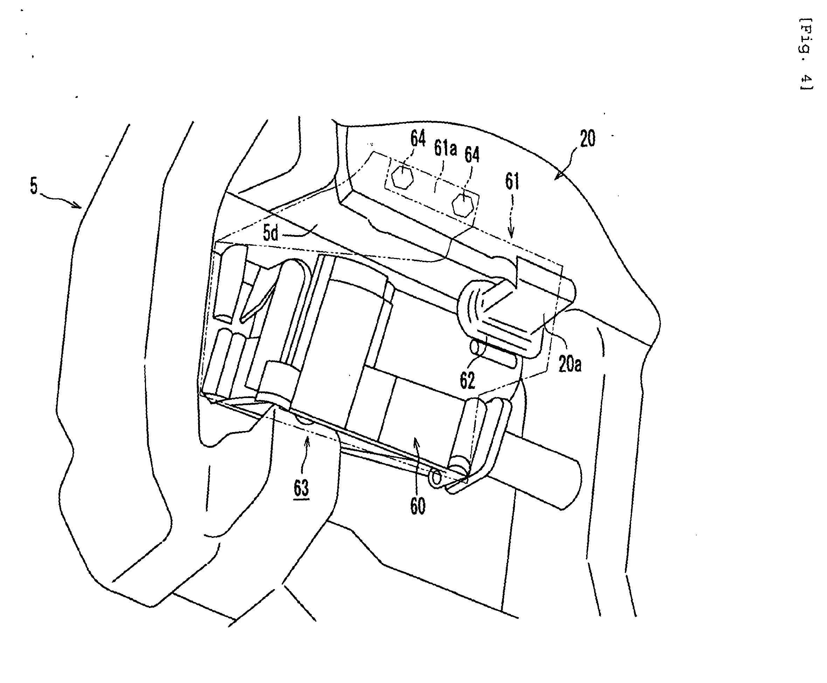

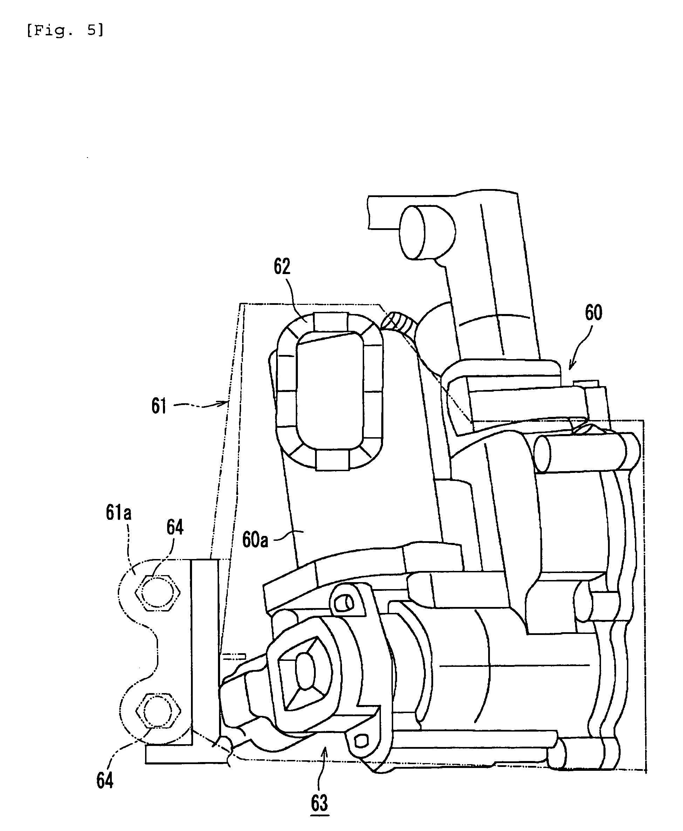

Referring to Fig. 3, the clutch actuator 60 is formed from a clutch control unit 63 that is integrally assembled with an attachment plate 61 on which various structural members are mounted. An engagement hole 62 (refer to Fig. 4 and Fig. 5) is fixed to the attachment plate 61. As shown in Fig. 4, the clutch control unit 63 is attached such that the engagement hole 62 is engaged with a protrusion 20a that is fixed to a rear section of the engine 20, and an attachment section 61a of the attachment plate 61 is fastened and fixed to a member 5d of the rear arm bracket 5 using fasteners 64, which are bolts or the like. In this manner, the clutch control unit 63 is arranged and positioned to the rear of the engine 20 and is surrounded by the rear arm bracket 5 when viewed from the side (refer to Fig. 1).

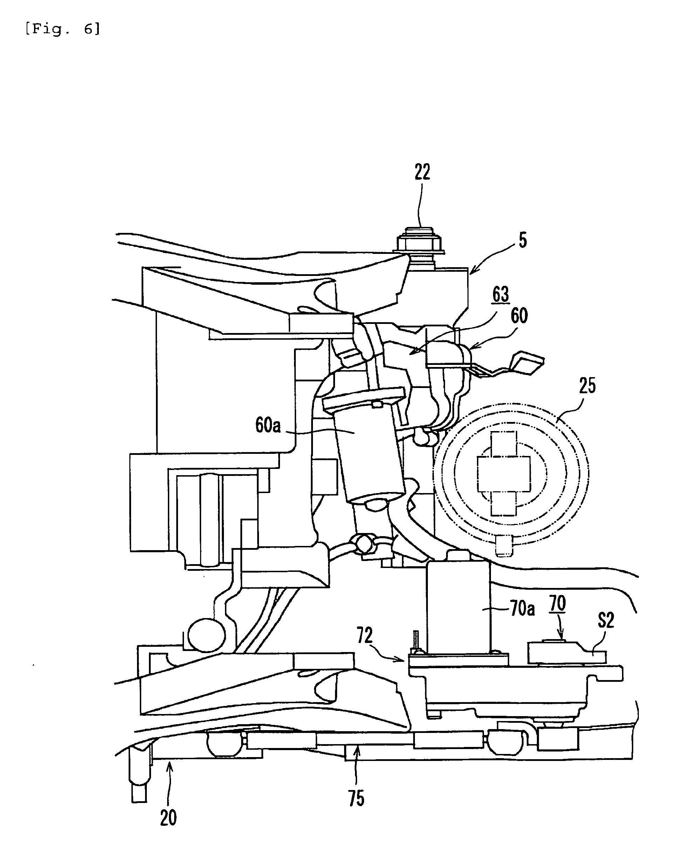

Referring to Fig. 2 and Fig. 6, the shift actuator 70 is integrated with a shift position detection sensor S2 (refer to Fig. 6), and these members configure a shift control unit 72. As can be seen from Fig. 2, an attachment bracket 73 is fixed to the back stay 7. The shift control unit 72 is attached by fastening and fixing the shift actuator 70 to the attachment bracket 73 using fasteners 74, which are bolts or the like. In this manner, the shift control unit 72 is arranged and positioned such that, when viewed from the side, the shift control unit 72 is opposite from the transmission 40 with the main frame 4 interposed therebetween, and the shift actuator 70 is positioned to the rear of the main frame 4.

The shift mechanism 43 and the shift actuator 70 are coupled together by a shift power transmission member. In this embodiment, the shift power transmission member is configured from a shift rod 75. The shift rod 75, when viewed from the side, passes across the body frame 2.

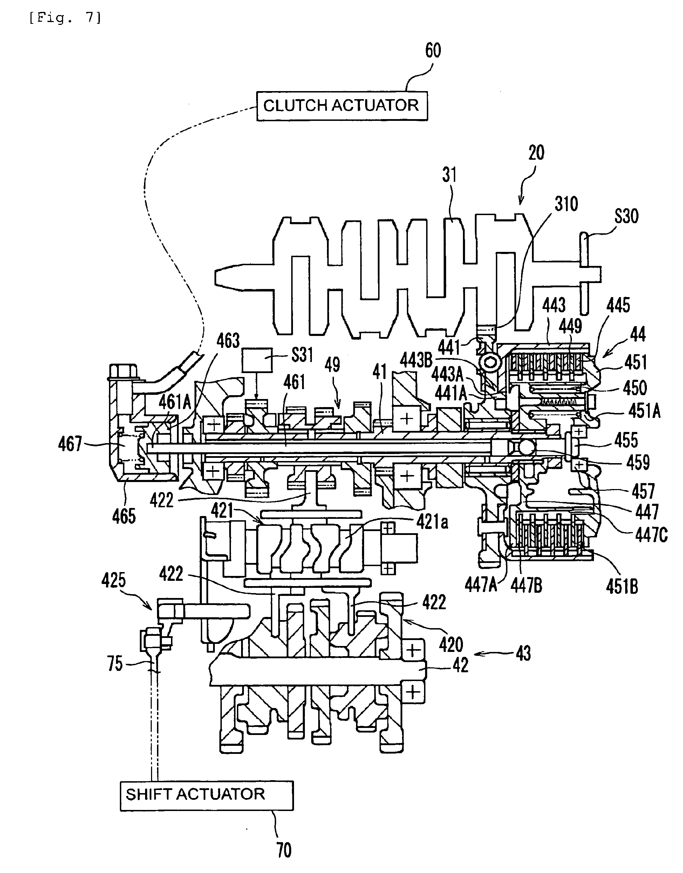

Next, the clutch mechanism 44 will be explained in detail. Fig. 7 shows a cross sectional view of the internal structure of the engine 20.

The clutch mechanism 44 according to the embodiment is, for example, a multi-plate friction clutch, and includes a clutch housing 443; a plurality of friction plates 445 provided integrally with the clutch housing 443; a clutch boss 447; and a plurality of clutch plates 449 provided integrally with the clutch boss 447. A gear 310 is integrally supported by the crank shaft 31 of the engine 20, and the main shaft 41 supports a gear 441 that meshes with the gear 310 such that the gear 441 can rotate with respect to the main shaft 41. The clutch housing 443 is integrally provided with the gear 441, and torque from the crank shaft 31 is transmitted to the clutch housing 443 through the gear 441. Torque from the clutch housing 443 is transmitted to the clutch boss 447 by frictional force generated between the plurality of friction plates 445 and the plurality of clutch plates 449.

The gear 441 is rotatably supported by the main shaft 41 at one end section (the right side in Fig. 7) of the main shaft 41. The clutch housing 443 is provided integrally with a boss section of the gear 441, thus allowing rotation with respect to the main shaft 41 while controlling movement in the axial direction of the main shaft 41. Further, the clutch boss 447 is integrally provided with the main shaft 41 at the side of the one end section of the main shaft 41 (further to the end of the one end section than the gear 441).

The clutch boss 447 is provided to the inside of the tubular clutch housing 443. The gear 441, the clutch housing 443, the clutch boss 447, and the main shaft 41 are provided coaxially with their centers of rotation aligned.

The boss section of the gear 441 is provided with a tubular engagement protrusion 441A. An engagement member 443B, formed with an engagement hole 443A that engages with the engagement protrusion 441A, is provided at one end section (on the left side of Fig. 7) of the tubular clutch housing 443. The engagement protrusion 441A is fitted into the engagement hole 443A to fix the clutch housing 443 to the gear 441.

Each friction plate 445 is a thin ring shaped plate. The external periphery edge of each friction plate 445 is supported at the inner periphery side of a tubular section of the clutch housing 443 such that the plate surface of each friction plate 445 is substantially perpendicular with respect to the axial direction of the main shaft 41. As a result of this support, each friction plate 445 is capable of very slight relative movement in the axial direction of the main shaft 41 with respect to the clutch housing 443. Further, each friction plate 445 is controlled such that it is not capable of relative rotation in the rotational direction of the main shaft 41 with respect to the clutch housing 443.

Note that, there is a predetermined space (with a length that is very slightly larger than the thickness of the clutch plate 449) between each of the above described plate surfaces of the friction plates 445.

The clutch boss 447 is tubular, and a circular flange 447A, which has an external diameter that is substantially the same as the external diameter of the clutch plate 449, is provided at one end section of the clutch boss 447 (the left side in Fig. 7). The plurality of clutch plates 449 are supported at the external periphery of the tubular section of the clutch boss 447. As a result of this support, each clutch plate 449 is capable of very slight relative movement in the axial direction of the main shaft 41 with respect to the clutch boss 447. Further, each clutch plate 449 is controlled such that it is not capable of relative rotation in the rotational direction of the main shaft 41 with respect to the clutch boss 447.

Moreover, the clutch boss 447 is fixed to the one end section side of the main shaft 41 (the right side in Fig. 7) such that the flange 447A is positioned at the engagement member 443B of the clutch housing 443.

Each clutch plate 449 is a thin ring shaped plate. The internal periphery edge of each clutch plate 449 is supported at the external periphery side of the tubular section of the clutch boss 447 such that the plate surface of each clutch plate 449 is substantially perpendicular with respect to the axial direction of the main shaft 41.

Further, there is a predetermined space (with a length that is very slightly larger than the thickness of the friction plate 445) between each of the above described plate surfaces of the clutch plates 449.

The external diameter of each clutch plate 449 is slightly smaller than the internal diameter of the tubular section of the clutch housing 443. The internal diameter of each friction plate 445 is slightly larger than the external diameter of the tubular section of the clutch boss 447. In addition, the friction plates 445 and the clutch plates 449 are alternately arranged in the axial direction of the main shaft 41, and a very slight space is formed between each of the friction plates 445 and the clutch plates 449 in the axial direction of the main shaft 441.

A pressing member 447B, structured by the flange 447A of the clutch boss 447, is provided at the engagement member 443B side (the left side in Fig. 7) of the clutch housing 443 at the external side in the axial direction of the main shaft 41 of the alternately arranged friction plates 445 and the clutch plates 449. The pressing member 447B and a pressure plate 451 squeezes the interposed friction plates 445 and the clutch plates 449 in the axial direction of the main shaft 41, thus generating frictional force between each friction plate 445 and each clutch plate 449.

A plurality of cylindrical guide members 447C, which extend in the axial direction of the main shaft 41 and which are provided integrally with the clutch boss 447, are provided at the internal side of the tubular clutch boss 447. The pressure plate 451 is provided with a plurality of guides 451A that respectively engage with the guides 447C. As a result of the guides 447C and the guides 451A, the pressure plate 451 is capable of relative movement in the axial direction of the main shaft 41 with respect to the clutch boss 447, and also rotates synchronously with the clutch boss 447. Note that, the pressure plate 451 is driven by the clutch actuator 60. The clutch actuator 60 will be described in detail later with reference to the drawings.

Further, the pressure plate 451 has a tabular pressing member 451B. This pressing member 451B is substantially parallel to the plate surface of each friction plate 445 and each clutch plate 449.

The clutch mechanism 44 is provided with a plurality of springs 450 that are disposed so as to respectively surround each of the plurality of tubular guides 447C. Each spring 450 urges the pressure plate 451 toward the left side of Fig. 7. In other words, each spring 450 urges the pressure plate 451 in the direction in which the pressing member 451B of the pressure plate 451 is moved close to the pressing member 447B of the clutch boss 447.

The pressure plate 451 is engaged at a central section of the pressure plate 451 with one end (the right side of Fig. 7) of a push rod 455 via a bearing like a deep groove ball bearing 457 such that the pressure plate 451 is capable of rotating with respect to the push rod 455. The other end of the push rod 455 (the left side of Fig. 7) is engaged with the internal side of one end section of the tubular main shaft 41. A spherical ball 459 that abuts with the other end of the push rod 455 (the left end) is provided at the internal side of the tubular main shaft 41. Further, a push rod 461 that abuts with the ball 459 is provided at the right side of the ball 459.

An end section (left end section) 461A of the push rod 461 protrudes outwards from the other end of the tubular main shaft 41. A piston 463 is integrally provided with this end section 461A. The piston 463 is guided by a cylinder body 465, and can slide in the axial direction of the main shaft 41.

When hydraulic oil, which acts as a compressed fluid, is supplied to a space 467 enclosed by the piston 463 and the cylinder body 465, the piston 463 is pushed and moved in the rightward direction of the Fig. 7. Accordingly, the piston 463 pushes the pressure plate 451 in the rightward direction of Fig. 7 via the push rod 461, the ball 459, the push rod 455, and the deep groove ball bearing 457. In this way, the pressure plate 451 is pushed in the rightward direction of Fig. 7, and the pressing member 451B of the pressure plate 451 separates away from the friction plates 445, thereby disengaging the clutch.

When the clutch mechanism 44 is connected, the pressure plate 451 is urged and moves in the direction of the flange 447A of the clutch boss 447 (the leftward direction of Fig. 7) by the springs 450. In this state, the pressing member 447B of the clutch boss 447 and the pressing member 451B of the pressure plate 451 cause frictional force to be generated between each friction plate 445 and each clutch plate 449. Accordingly, driving force can be transmitted from the clutch housing 443 to the clutch boss 447.

On the other hand, when the clutch mechanism 44 is disengaged, the push rod 455 moves the pressure plate 451 in the rightward direction of Fig. 7. Further, the pressing member 451B of the pressure plate 451 is separated away from the friction plate 445 positioned closest to the pressing member 451B (the friction plate 445 on the far right side of Fig. 7).

In this state, each friction plate 445 and each clutch plate 449 are not sandwiched, and thus a very slight space is formed between each friction plate 445 and each clutch plate 449. Accordingly, frictional force, which enables the transmission of driving force, is not generated between each friction plate 445 and each clutch plate 449.

In this manner, depending on the magnitude of the driving force of the clutch actuator 60 and the urging force of the springs 450, the pressure plate 451 is moved in one or the other of the axial directions of the main shaft 41. The clutch is connected or disengaged in accordance with this movement.

Next, the structure of the shift mechanism 43 will be explained in detail with reference to Fig. 7.

An engine rotation speed sensor S30 is mounted to the end of the crank shaft 31 of the engine 20. The crank shaft 31 is coupled to the main shaft 41 via the multi-plate clutch mechanism 44. The multi-speed gears 49 are mounted to the main shaft 41, and a main shaft rotation speed sensor S31 is also provided on the main shaft 41. Each gear 49 on the main shaft 41 meshes with a respective gear 420 mounted on the drive shaft 42 (the figure shows that they are separated) that corresponds with each gear 49. The gears 49 and the gears 420 are attached such that, apart from the selected pair of gears, either one or both of the gears 49 and gears 420 can rotate freely (in an idle state) with respect to either the main shaft 41 or the drive shaft 42. Accordingly, transmission of rotation from the main shaft 41 to the drive shaft 42 only occurs via the selected pair of gears.

The operation of selecting and changing the gear ratio of the gears 49 and the gears 420 is performed by a shift cam 421 that is a shift input shaft. The shift cam 421 has a plurality of cam grooves 421a. A shift fork 422 is mounted in each cam groove 421a. Each shift fork 422 engages with a predetermined gear 49 and gear 420 on the respective main shaft 41 and drive shaft 42. Rotation of the shift cam 421 causes the shift fork 422 to move in each axial direction while being guided by the cam groove 421 a, whereby only the pair of the gear 49 and the gear 420 at the position corresponding to the rotation angle of the shift cam 421 are spline fixed to the respective main shaft 41 and the drive shaft 42. Accordingly, the gear position is determined, and rotation is transmitted at a predetermined gear ratio between the main shaft 41 and the drive shaft 42 via the given gear 49 and the gear 420.

The shift mechanism 43 uses drive of the shift actuator 70 to reciprocally move the shift rod 75, whereby the shift cam 421 is rotated by just a predetermined angle via a shift link mechanism 425. Accordingly, the shift fork 422 moves just a predetermined amount in the axial direction along the cam groove 421 a. The pairs of gears 49 and gears 420 are thus fixed in order to the main shaft 41 and the drive shaft 42, whereby rotational driving force is transmitted at each reduction gear ratio.

Next, the structure of the shift actuator 70 will be explained in even more detail. Note that, the shift actuator 70 may be hydraulic or electric.

Fig. 8 is an outline view of the shift actuator 70, the shift rod 75, and the shift mechanism 43. Referring to Fig. 8, in the shift actuator 70 according to the embodiment, a shift motor 70a rotates when a signal is output from the engine control device 95. The rotation of the shift motor 70a causes a gear 70c of a motor shaft 70b to rotate. The rotation of the gear 70c causes a coupled reduction gear 70d to rotate, whereby a drive shaft 70g rotates.

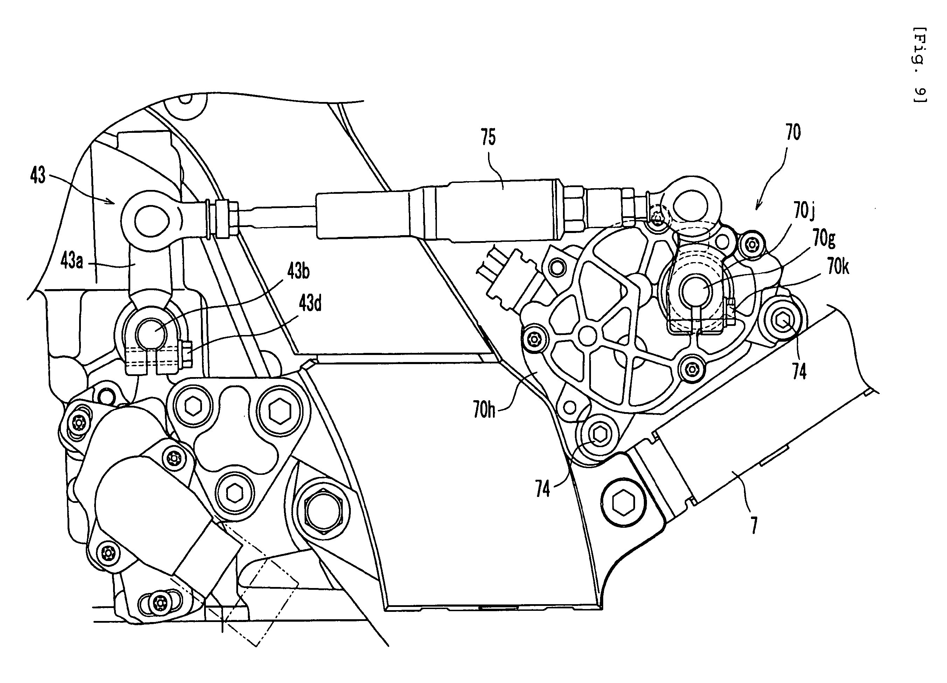

Fig. 9 shows a side view of the shift actuator 70, the shift rod 75, and the shift mechanism 43. Referring to Fig. 9, a housing 70h of the shift actuator 70 is fixed to the attachment bracket 73 fixed to the back stay 7 (refer to Fig. 2) using a fastener 74 (refer to Fig. 2).

An operation lever 70j is provided on the drive shaft 70g (refer to Fig. 8). A connecting section of the shift rod 75 on the shift actuator 70 side is connected using a bolt (not shown) to the operation level 70j. The connecting section of the shift rod 75 on the shift actuator 70 side is capable of rotating with respect to the operation lever 70j. Further, the operation lever 70j is fastened and fixed to the drive shaft 70g by a bolt 70k, whereby the operation lever 70j is prevented from moving in the axial direction of the drive shaft 70g.

The shift position detection sensor S2 is disposed on the drive shaft 70g (refer to Fig. 8). This shift position detection sensor S2 is disposed at an end (the end toward the inward direction of the paper of Fig. 9) of the drive shaft 70g, and is fastened and fixed to the housing 70h by an attachment bolt (not shown). The shift position detection sensor S2 detects position information based on the rotation of the drive shaft 70g, and transmits this position information to the engine control device 95. The engine control device 95 controls the shift motor 70a based on the position information.

Moreover, a connecting section of the shift rod 75 at the shift mechanism 43 side is connected to a shift operation lever 43a of the shift mechanism 43 by a bolt (not shown). The connecting section of the shift rod 75 at the shift mechanism 43 side is capable of rotating with respect to the shift operation lever 43a. Further, the shift operation lever 43a is fastened and fixed to a shift operation shaft 43b by a bolt 43d, whereby the shift operation lever 43a is prevented from moving in the axial direction of the shift operation shaft 43b.

When the shift rod 75 moves, the shift operation lever 43a moves along therewith. The movement of the shift operation lever 43a is a rotational motion centering on the shift operation shaft 43b that is spline engaged with the shift operation lever 43a. Thus, the shift operation shaft 43b rotates along with the movement of the shift operation lever 43a.

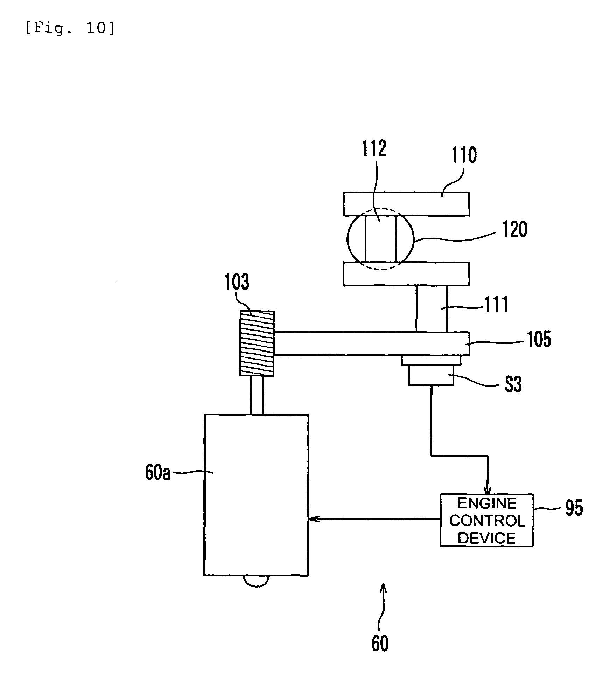

Next, the structure of the clutch actuator 60 will be explained in even more detail. Fig. 10 shows an outline view of the clutch actuator 60. Referring to Fig. 10, in the clutch actuator 60 according to the embodiment, a clutch motor 60a rotates when a signal is output by the engine control unit 95, and this rotation is accompanied by rotation of a worm shaft 103. Rotation of the worm shaft 103 is transmitted to a worm wheel 105 that is meshed with the worm shaft 103. The worm wheel 105 is fixed to a crank shaft 110 such that the worm wheel 105 is coaxial with a crank shaft member 111 of the crank shaft 110. In addition, an output rod 120 is fixed to a crank pin 112 of the crank shaft 110. Accordingly, rotational motion of the crank shaft 110 is converted to reciprocating motion of the output rod 120 (in terms of the paper of Fig. 10, motion from the inward direction to the outward direction). Moreover, a clutch position detection sensor S3 is provided at an end of the crank shaft member 111 of the crank shaft 110. The clutch position detection sensor S3 detects the rotation angle of the crank shaft 110 (in the embodiment, the crank shaft member 111). The rotation angle of the crank shaft 110 is used to detect the stroke of the output rod 120, which is then used as basis for detecting the clutch position of the clutch mechanism 44. The clutch position detection sensor S3 corresponds to a rotation angle sensor of the present teaching.

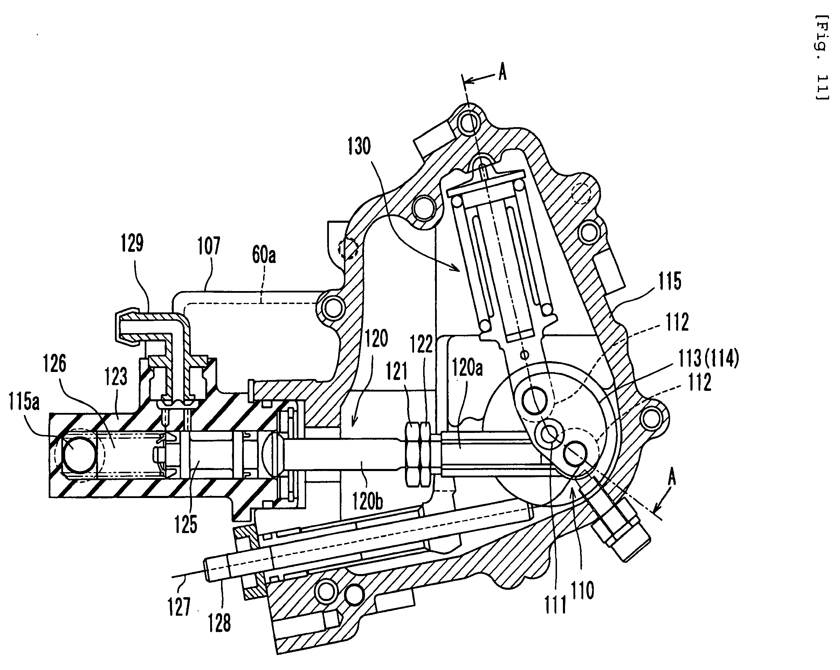

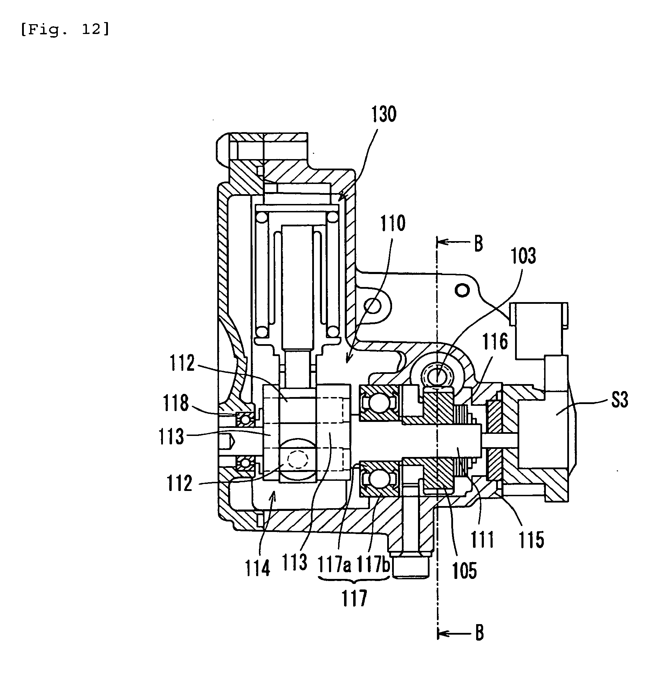

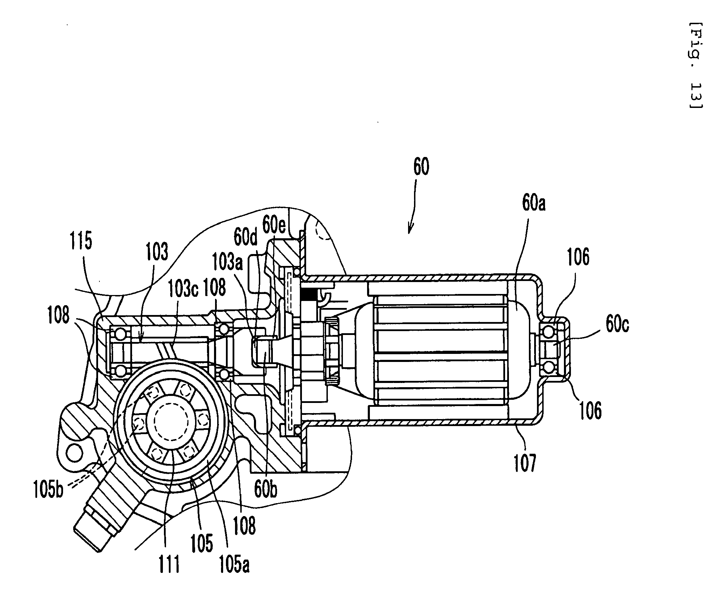

Fig. 11 is a cross sectional view of the clutch actuator 60. Fig. 12 is a cross sectional view along line A-A of Fig. 11, and Fig. 13 is a cross sectional view along line B-B of Fig. 12. Referring to Fig. 13, the clutch motor 60a is provided with a motor shaft 60b. The motor shaft 60b is disposed to pass through the center of the clutch motor 60a. A rear side end (the right side end in the figure) 60c of the motor shaft 60b is supported by a motor bearing 106. An outer ring of the motor bearing 106 is fixed to a motor case 107 that houses the clutch motor 60a. Note that, the motor bearing 106 is a ball bearing.

A front side end (the left side end in the figure) 60d of the motor shaft 60b is formed with a plurality of splines 60e. The front side end 60d is inserted and fitted within a spline hole 103a formed in the worm shaft 103, whereby the motor shaft 60b and the worm shaft 103 are spline fitted together.

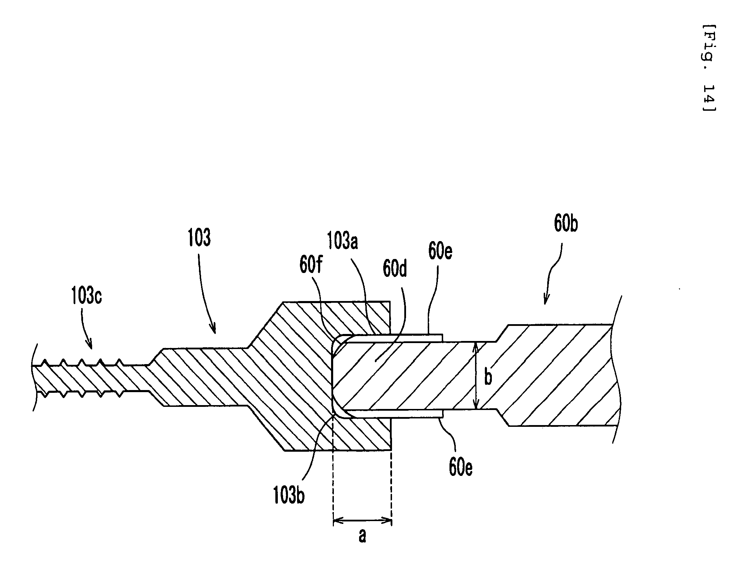

Fig. 14 is an enlarged cross sectional view of the fitting portion of the motor shaft 60b and the worm shaft 103. Referring to Fig. 14, the plurality of spine teeth 60e are formed in the front side end 60d of the motor shaft 60b. In addition, a spline groove that engages with the spline teeth 60e is formed in the spline hole 103a of the worm shaft 103. Further, the front side end 60d of the motor shaft 60b is inserted and fitted in the spline hole 103a of the worm shaft 103, whereby the members are spline fitted together.

In addition, the front side end 60d of the motor shaft 60b is chamfered to form a rounded section 60f. The round section 60f is formed to spread across an area further to the shaft center side of the motor shaft 60b than the bottom of the spline teeth 60e. As a result of chamfering the front side end 60d of the motor shaft 60b in this way, even if the shaft center of the motor shaft 60b oscillates during rotation of the clutch motor 60a, this can be absorbed at the worm shaft 103 side. Accordingly, transmission of oscillation to the worm shaft 103 can be inhibited. Further, the bottom of the spline hole 103a of the worm shaft 103 is also chamfered to form a rounded section 103b.

Moreover, a depth a of the spline hole 103a of the worm hole 103 is smaller than a diameter b of the front side end 60d of the motor shaft 60b. In other words, a < b. As a result of making the section of the motor shaft 60b fitted into the worm shaft 103 shorter in this way, oscillation of the shaft center of the motor shaft 60b during rotation thereof can be favorably absorbed at the worm shaft 103 side.

Referring to Fig. 13, a threaded section 103c (also refer to Fig. 14) is formed in the worm shaft 103. Further, the worm shaft 103 is supported by bearings 108 that are respectively disposed at the front side (the left side in the figure) and the rear side (the right side in the figure) of the threaded section 103c. The two bearings 108 are both ball bearings. The outer rings of the bearings 108 are fixed to a housing 115 of the clutch actuator 60. In this manner, the front and rear of the threaded section 103c is supported by the bearings 108, whereby shaft oscillation of the worm shaft 103 during rotation is inhibited, and rotation of the worm shaft 103 is stabilized.

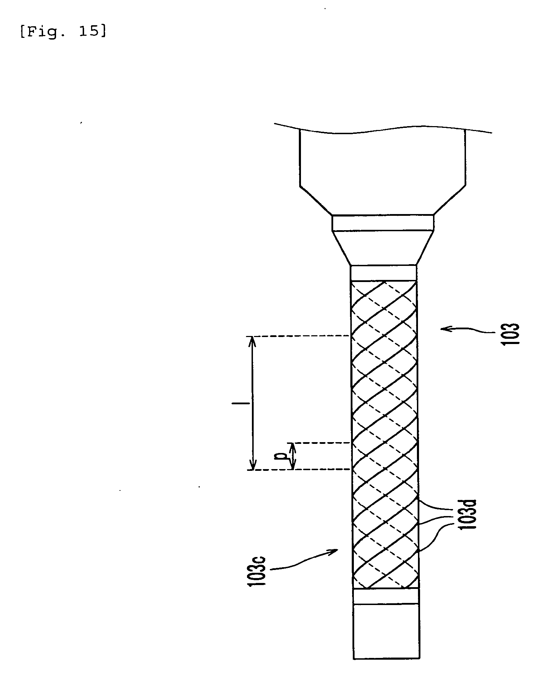

Fig. 15 is an enlarged view of the section of the worm shaft 103 in which the threaded section 103c is formed. Referring to Fig. 15, the threaded section 103c of the worm shaft 103 is formed with a plurality of threads 103d. Note that, Fig. 15 is intended to explain the number of threads of the threaded section 103c, but does not provide an accurate illustration of the shape of the threads 103d formed in the periphery surface of the thread section 103c.

Here, the distance moved in the axial direction when the worm shaft 103 rotates once will be taken to be lead I, the distance between adjacent threads 103d will be taken to be pitch p, and the number of threads in the threaded section 103c will be taken to be n. Given this, the relationship I = n × p is established. As is apparent from Fig. 15, in this embodiment, the number of threads n of the threaded section 103c is 4. By setting the number of threads of the threaded section 103c formed in the worm shaft 103 to be 2 or more (multiple) in this way, it is possible to make the lead angle of the worm wheel 105 larger. Accordingly, the reduction gear ratio of the worm gear (the reduction gear ratio between the worm shaft 103 and the worm wheel 105) can be set smaller, thereby allowing the responsiveness of the output rod 120 to be improved. As a result, responsiveness of the disengagement-engagement operation of the clutch mechanism 44 can be improved. Further, the transmission efficiency of multiple threads is better than that of a single thread, and thus the reciprocating motion of the output rod 120 (refer to Fig. 10 and Fig. 11) rapidly follows the rotational motion of the clutch motor 60a. As a result, the responsiveness of the clutch disengagement-engagement operation can be improved.

Referring to Fig. 13, the threaded section 103c of the worm shaft 103 meshes with gear teeth 105a of the worm wheel 105. The worm wheel 105 has a substantially ring-like shape, with the gear teeth 105a formed in the periphery surface thereof. Torque limiters 105b are provided in a shaft center section of the worm wheel 105. The torque limiters 105b are provided with: a transmission plate (not shown), which is spline fitted to the crank shaft member 111 of the crank shaft 110 (refer to Fig. 12) and which rotates along with the crank shaft 111; and an inner clutch (not shown) provided at the external edge of the transmission plate. When the driving force applied to the worm wheel 105 becomes equal to or greater than a predetermined value, the transmission plate and the inner clutch slip with respect to each other, thereby preventing excessive driving force from being transmitted to the crank shaft member 111. Note that, it is not essential to provide the torque limiters 105b in the invention, and the worm wheel 105 may be integrally fixed to the crank shaft 110.

Referring to Fig. 12, the worm wheel 105 is fixed to an end of the crank shaft member 111 of the crank shaft 110 (the right side end in Fig. 12). The worm wheel 105 is fixed to the crank shaft member 111 such that the worm wheel 105 is coaxial with the crank shaft member 111 and is parallel with a crank arm 114 of the crank shaft 110. A side surface of the worm wheel 105 is perpendicular with respect to the crank shaft member 111. The crank arm 114 is provided with a pair of arm sections 113 that are positioned to face each other, and the crank pin 112 that is coupled to the pair of arm sections 113. Further, the crank shaft member 111 extends from substantially the center of the arm sections 113 toward the side (in the left-right direction of Fig. 12).

The crank shaft member 111 of the crank shaft 110 is rotatably fixed at both ends of the housing 115. In addition, a Belleville spring 116 is interposed between the worm wheel 105 and the housing 115 on the crank shaft member 111.

The crank shaft member 111 is supported by a pair of bearings 117, 118. The outer rings of these two bearing 117, 118 are both fixed to the housing 115. The pair of bearings 117, 118 are both ball bearings. Among the two bearings, the bearing 117 is close to the worm wheel 105, and is disposed between the worm wheel 105 and the right-side arm section 113. The bearing 117 is a double sealed bearing that has seals on both the side of an inner ring 117a and an outer ring 117b. Bearing grease is enclosed in the inside of the bearing 117. Grease (molybdenum grease) is used between the above described worm shaft 103 and the worm wheel 105. However, this grease can potentially have a detrimental impact on the bearing 117 that is adjacent to the worm wheel 105. More specifically, if the above grease were to adhere to the inside of the bearing 117, it is possible that performance of the bearing 117 would be impaired. Thus, in the embodiment, a double sealed bearing is adopted for the bearing 117, and bearing grease is enclosed in the inside. As a result, the grease used between the worm shaft 103 and the worm wheel 105 can be prevented from entering inside the bearing 117 and having a detrimental impact.

Further, the bearing 118 is disposed to the left side of the left-side arm section 113. Accordingly, the crank arm 114 is interposed between the bearing 117 and the bearing 118. As a result of disposing the two bearings 117, 118 with the crank arm 114 interposed therebetween in this manner, it is possible to stabilize rotation of the crank shaft member 111. Note that, the above described bearing 117 corresponds to a first bearing of the present teaching, and the bearing 118 corresponds to a second bearing of the present teaching.

Moreover, the bearing 117 disposed in the vicinity of the worm wheel 105 is a larger ball bearing than the bearing 118 that is disposed at a position away from the worm wheel 105. The bearing 117 disposed close to the worm wheel 105 is subjected to a comparatively large force acting in the radial direction. Accordingly, it is favorable if a large ball bearing is used in this manner. On the other hand, the bearing 118 disposed at the position away from the worm wheel 105 is subjected to a comparatively small force acting in the radial direction. Accordingly, it is possible to use a bearing that is smaller (has a smaller diameter) than that of the bearing 117.

Further, the right side end of the crank shaft member 111 of the crank shaft 110 is provided with the clutch position detection sensor S3 (refer to Fig. 10). The clutch position detection sensor S3 detects the rotation angle of the worm wheel 105, and uses it to detect the stroke of the output rod 120, which is used as a basis for detecting the clutch position of the clutch mechanism 44.

Referring to Fig. 11, the output rod 120 is fixed to the crank pin 112 at the lower side of the crank arm 114. A section of the lower side crank pin 112 to which the output rod 120 is fixed, as shown in Fig. 12, overlaps with the crank shaft member 111 in the diameter direction. More specifically, when the crank shaft member 111 is viewed from the external side in the axial direction (the right side in Fig. 12), a section of the crank pin 112 overlaps with the crank shaft member 111. As a result of positioning the crank pin 112 to which the output rod 120 is fixed such that it overlaps with the crank shaft member 111 in this manner, the attachment radius of the output rod 120 (the distance from the center of the crank shaft member 111 to the point where the output rod 120 is attached) can be made smaller. As a result, the rotation angle of the worm wheel 105 that is required to move the output rod 120 the same stroke can be made larger. Accordingly, the worm wheel 105 can be made smaller, and responsiveness can be improved. Further, size reduction of the worm wheel 105 can also be promoted.

Referring to Fig. 11, the output rod 120 includes a base 120a formed with a tapped hole, and a rod 120b formed with a threaded section. The threaded section of the rod 120b is screwed into the tapped hole of the base 120a. In addition, a lock nut 121 and a nut 122 are screwed onto the threaded section of the rod 120b.

Adoption of this configuration in the embodiment allows adjustment of the length of the output rod 120. More specifically, the rod 120b can be rotated with respect to the base 120a in order to change the length of the output rod 120. After the length has been changed, the lock nut 121 and the nut 122 are tightened on the base 120a side, thereby fixing the output rod 120.

A tip of the rod 120b of the output rod 120 is provided with a piston 125. The piston 125 can slide in the axial direction of the output rod 120 within a cylinder 123 (the left-right direction in the figure). A left side section of the piston 125 in the cylinder 123 forms an oil chamber 126 that is filled with hydraulic oil. The oil chamber 126 is connected with a reservoir (not shown) via a tank connecting member 129.

In addition, one end of an assist spring 130 is fixed to the crank pin 112 at the upper side of the crank arm 114. The other end of the assist spring 130 is fixed to the housing 115. The assist spring 130 assists rotation of the crank shaft member 111 of the crank shaft 110, thereby assisting the stroke of the output rod 120.

In the embodiment, as shown in Fig. 11, the assist spring 130 is attached to the crank arm 112. Accordingly, the assist spring 130 and the crank arm 114 are substantially positioned in a single plane. Arranging and positioning the assist spring 130 in this manner makes it possible to shorten the axial direction length of the clutch actuator 60 and thus promote size reduction of the clutch actuator 60.

When the clutch mechanism 44 (refer to Fig. 7) is switched from a connected to a disconnected state, the clutch motor 60a is driven, thereby causing the coupled worm shaft 103 to rotate. Rotation of the worm shaft 103 is transmitted to the worm wheel 105 that is meshed with the worm shaft 103, and the worm wheel 105 rotates. When the worm wheel 105 rotates, the crank shaft member 111 of the crank shaft 110 that fixes the worm wheel 105 also rotates. Then, the rotational motion of the worm wheel 105 is converted to linear motion of the output rod 120 by the crank shaft 110, and the output rod 120 moves in the leftward direction of Fig. 11.

The output rod 120 that moves linearly in the leftward direction of Fig. 11 pushes the piston 125, thereby generating hydraulic pressure in the oil chamber 126. The generated hydraulic pressure is transmitted to the piston 463 (refer to Fig. 7) from a hydraulic fluid outlet 115a formed in the housing 115 via an oil hose (not shown). Then, the hydraulic pressure drives the push rods 461, 455 (refer to Fig. 7) to disengage the clutch. Note that, the linear motion of the output rod 120 is assisted by the above mentioned assist spring 130.

With this embodiment, it is possible to automatically disengage the clutch mechanism 44 by driving the clutch motor 60a, and also manually disengage the clutch mechanism 44. Referring to Fig. 11, a guide tube 128 for a clutch wire 127 is provided at the lower side of the output rod 120 in the housing 115. One end of the clutch wire 127 is fixed to the lower side crank pin 112. As a result of the guide tube 128, the clutch wire 127 is positioned to run in a direction that extends leftwards and downwards in the figure. When a clutch lever, or the like, not shown, is manually operated, the clutch wire 127 is pulled in the longitudinal direction of the guide tube 128 (the leftward-downward direction in Fig. 11), thereby rotating the crank shaft 110 and moving the output rod 120 in the leftward direction of Fig. 11.

As shown in Fig. 11, the clutch motor 60a connected to the worm shaft 103 and the output rod 120 fixed to the crank pin 112 extend in substantially the same direction. However, in order to position the clutch motor 60a and the output rod 120 such that there is no interference therebetween, the clutch motor 60a and the output rod 120 must be positioned apart from each other to a certain extent. In this case, in the embodiment, as shown in Fig. 12, the worm wheel 105 is fixed to the end of the crank shaft member 111 of the crank shaft 110 separately from the crank arm 114. Further, the worm wheel 105 is disposed to be parallel to the crank arm 114, and coaxial with the crank shaft member 111. As a result, even if the clutch motor 60a disposed close to the worm wheel 105 and the output rod 120 fixed to the crank pin 112 are positioned so that they do not interfere with each other, the length of the crank shaft member 111 can be made shorter. As a result, size and the weight increase of the crank shaft 110 is restricted, and in addition size and the weight increase of the clutch actuator 60 itself is also restricted.

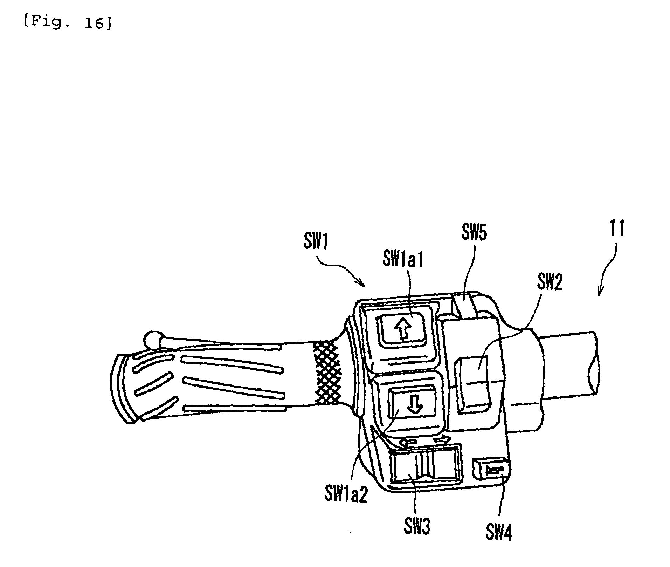

Next, the system of the automatic transmission control device will be explained in more detail. As shown in Fig. 16, a shift switch SW1, for example, is provided on a grip on the left side of the steering handlebar 11. The shift switch SW1 is configured from an upshift switch SW1a1 and a down-shift switch SW1a2. The rider operates the shift switch SW1 as necessary to upshift or downshift the shift position of the gears between a first gear speed and a fastest speed gear (for example, a sixth gear speed). Further, a selection switch SW2, an indicator switch SW3, a horn switch SW4 and a light switch SW5 are also provided on the left grip. Note that, the selection switch SW2 is used to select whether the gear shift operation is performed using a semi-automatic mode or a fully-automatic mode.

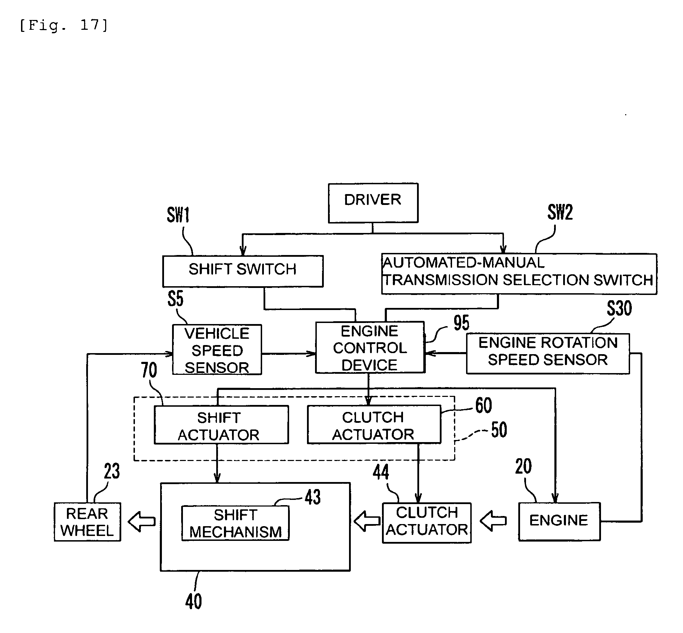

Referring to Fig. 17, switching of the shift mechanism 43 and the clutch mechanism 44 are both performed by the automatic transmission control device 50. Further, the motorcycle 1 is provided with, in addition to the shift position detection device S2 (refer to Fig. 6) of the shift actuator 70, the clutch position detection device S3 (refer to Fig. 10) of the clutch actuator 60, the engine rotation speed sensor S30, and a vehicle speed sensor S5, etc.

The engine control device 95 controls drive of the clutch actuator 60 and the shift actuator 70 based on the detection data of the various detection sensors and the instruction of the shift switch SW1. More specifically, predetermined programs that are pre-stored in the engine control device 95 and other operating circuits are used to automatically perform a series of shift operations including disengaging the clutch mechanism 44, switching the gears of the transmission 40, and engaging the clutch mechanism 44.

As described above, according to the clutch actuator 60 according to the embodiment, the bearing 117 is provided between the worm wheel 105 and the crank arm 114. As a result, the crank shaft member 111 can be made thinner, thereby allowing the attachment radius of the output rod 120 to be made smaller. Note that, because the attachment radius of the output rod 120 is smaller, the rotation angle that the crank shaft member 111 is required to rotate in order to move the output rod 120 the same stroke can be made larger. Accordingly, the rotation angle of the worm wheel 105 can be made larger. As a result, the diameter of the worm wheel 105 can be made smaller, which makes it possible to restrict increase in the size and weight of the clutch actuator 60. Further, because the diameter of the worm wheel 105 is smaller, the reduction gear ratio between the worm shaft 103 and the worm wheel 105 can be made smaller, thereby allowing the operation of the output rod 120 to rapidly follow the rotation of the clutch motor 60a, and the responsiveness of the clutch disengagement-engagement operation to be improved.

Further, according to the clutch actuator 60 according to this embodiment, the worm wheel 105 is fixed to the end of the crank shaft member 111 of the crank shaft 110 separately from the crank arm 114. In addition, the worm wheel 105 is positioned parallel to the crank arm 114 and coaxially with the crank shaft member 111. In addition, the assist spring 130 is attached to the crank arm 114 not to the crank shaft member 111. As a result, when the clutch motor 60a disposed close to the worm wheel 105 and the output rod 120 fixed to the crank arm 114 are positioned so as not to interfere with each other, it is possible to shorten the length of the crank shaft member 111. As a result, size and the weight increase of the crank shaft 110 can be restricted, and the size and weight increase of the clutch actuator 60 itself can also be restricted.

Moreover, according to the embodiment, the bearings 117, 118 are respectively positioned at either side of the crank arm 114. Accordingly, rotation of the crank shaft 110 can be stabilized, thereby allowing the operation of the output rod 120 to be stabilized and the disengagement-engagement operation of the clutch mechanism 44 to be stabilized.

As shown in Fig. 12, according to the embodiment, the bearing 117 supports one end of the crank shaft member 111 in a cantilever-like manner. In other words, the right end of the crank shaft member 111 is only supported by the bearing 117 positioned at the left side. No bearing for supporting the crank shaft member 111 is provided further to the right from the bearing 117. In addition, the worm wheel 105 is attached at the one end of the crank shaft member 111 that is cantilever supported in this manner. However, the bearing 117 is disposed between the worm wheel 105 and the crank arm 114, with the bearing 117 positioned close to the worm wheel 105. Accordingly, even though the worm wheel 105 is attached to the cantilever-supported section of the crank shaft member 111, no strength-related problems arise. Thus, according to the embodiment, the number of bearings can be reduced and size reduction of the actuator 60 can be promoted.

Further, in the embodiment, a section of the lower side crank pin 112 to which the output rod 120 is fixed overlaps in the diameter direction with the crank shaft member 111. More specifically, when the crank shaft member 111 is viewed from the external side in the axial direction (the right side in Fig. 12), a section of the crank pin 112 overlaps with the crank shaft member 111. As a result of positioning the crank pin 112 to which the output rod 120 is fixed such that it overlaps with the crank shaft member 111 in this manner, the attachment radius of the output rod 120 can be made smaller. As a result, the rotation angle of the worm wheel 105 that is required to move the output rod 120 the same stroke can be made larger. Accordingly, the worm wheel 105 can be made smaller, and responsiveness can be improved. Further, size reduction of the worm wheel 105 can also be promoted.

In addition, in this embodiment, the assist spring 130 is attached to the crank arm 114, and the assist spring 130 and the crank arm 114 are substantially positioned in a single plane. As a result, the axial direction length (the left-right direction of Fig. 12) of the clutch actuator 60 can be shortened, and size reduction of the clutch actuator 60 can be promoted.

In addition, according to this embodiment, the bearing 118 disposed at the position away from the worm wheel 105 is a smaller bearing (has a smaller diameter) than the bearing 117. Accordingly, size reduction of the actuator 60 can be promoted.

On the other hand, the bearing 117 is a comparatively large ball bearing. Accordingly, force generated by the worm wheel 105 that acts in the radial direction can be favorably supported. Thus, even though the crank shaft member 111 is made thinner, no strength related problems occur. The above feature also allows size and weight increase of the actuator 60 to be restricted.

The clutch actuator 60 according to the embodiment is provided with the rotation angle sensor (the clutch position detection sensor S3) for detecting the rotation angle of the crank shaft 110. As described previously, in the embodiment, the rotation angle of the worm wheel 105 can be increased, thereby allowing the rotation angle of the crank shaft 110 coupled to the worm wheel 105 to also be increased. Thus, according to the embodiment, when the rotation angle of the crank shaft 110 is detected by the above rotation angle sensor, resolution can be increased, thereby allowing detection accuracy to be improved.

Note that, it is sufficient that the rotation angle sensor can, as a final result, detect the rotation angle of the crank shaft 110. Thus the rotation angle sensor is not restricted to directly detecting a section (for example, the crank shaft member 111 or the crank arm 113) or the whole of the crank shaft 110. The rotation angle sensor may detect a rotation angle of another member that rotates along with the crank shaft 110 (for example, the worm wheel 105), in order to indirectly detect the rotation angle of the crank shaft 110.

The description above discloses (amongst others), an embodiment of the clutch actuator which includes: a motor having a motor shaft; a worm shaft formed with a threaded section and that rotates coaxially with the motor shaft; a worm wheel that meshes with the threaded section of the worm shaft; a crank shaft having a crank shaft member that rotates in accordance with rotation of the worm wheel, and a crank arm provided on the crank shaft member at a distance apart from the worm wheel; an output rod, attached to the crank arm, that converts rotational motion of the worm wheel transmitted via the crank shaft to reciprocating motion, and disengages and engages a clutch; and a first bearing that supports the crank shaft member of the crank shaft between the worm wheel and the crank arm.

According to the above clutch actuator, the first bearing is provided between the worm wheel, and the crank arm to which the output rod is attached. Accordingly, the crank shaft member of the crank shaft is reliably supported by the first bearing, thus making it possible to make the crank shaft member thinner. Therefore, the attachment radius of the output rod can be made smaller. Note that, because the attachment radius of the output rod is smaller, it is possible to increase the rotation angle required of the crank shaft member to move the output rod the same stroke. As a result, the rotation angle of the worm wheel can be increased, thereby allowing the diameter of the worm wheel to be made smaller, and size and weight increase of the actuator to be restricted. Further, because the diameter of the worm wheel is smaller, the reduction gear ratio between the worm shaft and the worm wheel can be made smaller. Accordingly, the movement of the output rod follows the rotation of the motor rapidly, and the responsiveness of the clutch disengagement-engagement operation is improved.

According to this embodiment, size and weight increase of the clutch actuator can be restricted, and responsiveness of the clutch disengagement-engagement operation can be improved.

The description above further discloses, according to a first preferred aspect, a clutch actuator comprising: a motor having a motor shaft; a worm shaft formed with a threaded section and that rotates coaxially with the motor shaft; a worm wheel that meshes with the threaded section of the worm shaft; a crank shaft having a crank shaft member that rotates in accordance with rotation of the worm wheel, and a crank arm provided on the crank shaft member at a distance apart from the worm wheel; an output rod, attached to the crank arm, that converts rotational motion of the worm wheel transmitted via the crank shaft to reciprocating motion, and disengages and engages a clutch; and a first bearing that supports the crank shaft member of the crank shaft between the worm wheel and the crank arm.

Further, according to a second preferred aspect, the worm wheel may be fixed to the crank shaft member of the crank shaft such that the worm wheel is coaxial with the crank shaft member of the crank shaft and is parallel with the crank arm.

Further, according to a third preferred aspect, the clutch actuator may further comprise: a second bearing that supports the crank shaft, the second bearing being disposed such that the crank arm is positioned between the first bearing and the second bearing.

Further, according to a fourth preferred aspect, the first bearing and the second bearing might be respectively ball bearings.

Further, according to a fifth preferred aspect, the crank arm may include a pair of arm sections positioned to face each other, and a crank pin that couples together the arm sections, the output rod may be attached to the crank pin, and when viewed from an axial direction of the crank shaft member of the crank shaft, a section of the crank pin may overlap with the crank shaft member.

Further, according to a sixth preferred aspect, the clutch actuator may further comprise: an assist spring, attached to the crank arm, that assists rotation of the crank shaft by extending and contracting in a direction that intersects with the crank shaft member of the crank shaft.

Further, according to a seventh preferred aspect, one end of the crank shaft member of the crank shaft may be cantilever supported by the first bearing, and the worm wheel may be attached to the one end of the crank shaft member of the crank shaft that is cantilever supported.

Further, according to an eighth preferred aspect, the clutch actuator may further comprise: a rotation angle sensor that detects a rotation angle of the crank shaft.

Further, according to a ninth preferred aspect, the second bearing has a smaller diameter than the first bearing.

Further, according to a tenth preferred aspect, there is provided an engine unit comprising: an engine; a clutch that disengages and engages transmission of driving force of the engine; and the clutch actuator according to one of the first to ninth preferred aspects.

Further, according to an eleventh preferred aspect, there is provided a saddle-type vehicle comprising the engine unit according to the tenth preferred aspect.

The description above further discloses, as a particularly preferred aspect, in order to provide a clutch actuator that can restrict increase in structure size and weight, and that can improve responsiveness of a clutch disengagement-engagement operation, an embodiment including a worm shaft 103 that rotates along with a clutch motor is meshed with a worm wheel 105, wherein the worm wheel 105 is fixed to one end of a crank shaft member 111 of a crank shaft 110 separately from a crank arm 114 of the crank shaft 110, and wherein a bearing 117 that supports the crank shaft 110 is provided between the worm wheel 105 and the crank arm 114.

## Claims

1. Clutch actuator (60) for disengaging and engaging a clutch of a motorcycle, said clutch actuator comprising:
a motor (60a);
a worm shaft (103) which rotates with the motor (60a);
a worm wheel (105) that meshes with the worm shaft (103);
a crank shaft (110), said crank shaft (110) having a crank shaft member (111) that rotates in accordance with rotation of the worm wheel (105), and a crank arm (114) that is provided on the crank shaft member (111) at a distance apart from the worm wheel (105); and
an output rod (120) attached to the crank arm,
wherein the crank shaft member (111) of the crank shaft (110) is supported by a , first bearing (117) provided between the worm wheel (105) and the crank arm (114) and a second bearing (118) is provided that supports the crank shaft (110), wherein the second bearing (118) is disposed such that the crank arm (114) is positioned between the first bearing (117) and the second bearing (118).

2. Clutch actuator according to claim 1, wherein the worm wheel (105) is fixed to the crank shaft member (111) of the crank shaft (110) such that the worm wheel (105) is coaxial with the crank shaft member (111) of the crank shaft (110) and is parallel with the crank arm (114).

3. Clutch actuator according to claim 1 or 2, wherein the first bearing (117) and/or the second bearing (118) are respectively ball bearings.

4. Clutch actuator according to one of the claims 1 to 3, wherein the crank arm (114) includes a pair of arm sections positioned to face each other, and a crank pin (112) that couples together the arm sections, wherein the output rod (120) is attached to the crank pin (112), and wherein, when viewed from an axial direction of the crank shaft member (111) of the crank shaft (110), a section of the crank pin (112) overlaps with the crank shaft member (111).

5. Clutch actuator according to one of the claims 1 to 4, further comprising an assist spring (130), attached to the crank arm (114), wherein the assist spring assists rotation of the crank shaft (110).

6. Clutch actuator according to one of the claims 1 to 5, wherein one end of the crank shaft member (111) of the crank shaft (110) is cantilever supported by the first bearing (117), and wherein the worm wheel is attached to this cantilever supported end of the crank shaft member (111) of the crank shaft (110).

7. Clutch actuator according to one of the claims 1 to 3, **characterized by** a rotation angle sensor (S3) that detects a rotation angle of the crank shaft (110).

8. Clutch actuator according to one of the claims 1 to 7, wherein the second bearing (118) has a smaller diameter than the first bearing (117).

9. Engine unit comprising an engine, a clutch that disengages and engages transmission of driving force of the engine; and a clutch actuator according to one of the claims 1 to 8.

10. Motorcycle comprising the engine unit according to claim 9.

## Patentansprüche

1. Kupplungsbetätiger (60) zum Außer- Eingriff- Bringen oder In- Eingriff- Bringen einer Kupplung eines Motorrades, wobei der Kupplungsbetätiger aufweist:
einen Motor (60a);
eine Schneckenwelle (103), die mit dem Motor (60a) rotiert;
ein Schneckenrad (105), das mit der Schneckenwelle (103) im Eingriff ist;
eine Kurbelwelle (110), wobei die Kurbelwelle (110) ein Kurbelwellenteil (111) hat, das in Übereinstimmung mit der Rotation des Schneckenrades (105) rotiert, und einen Kurbelarm (114), der an dem Kurbelwellenteil (111) in einem Abstand von dem Schneckenrad (105) vorgesehen ist; und
einen Abtriebsstab (120), der mit dem Kurbelarm verbunden ist,
wobei das Kurbelwellenteil (111) der Kurbelwelle (110) durch ein erstes Lager (117) gelagert ist, angeordnet zwischen dem Schneckenrad (105) und dem Kurbelarm (114), und ein zweites Lager (118) angeordnet ist, das die Kurbelwelle (110) lagert, wobei das zweite Lager (118) angeordnet ist derart, dass der Kurbelarm (114) zwischen dem ersten Lager (117) und dem zweiten Lager (118) angeordnet ist.

2. Kupplungsbetätiger nach Anspruch 1, wobei das Schneckenrad (105) an dem Kurbelwellenteil (111) der Kurbelwelle (110) befestigt ist derart, dass das Schneckenrad (105) mit dem Kurbelwellenteil (111) der Kurbelwelle (110) koaxial ist und parallel mit dem Kurbelarm (114) ist.

3. Kupplungsbetätiger nach Anspruch 1 oder 2, wobei das erste Lager (117) und 1 oder das zweite Lager (118) jeweils Kugellager sind.

4. Kupplungsbetätiger nach einem der Ansprüche 1 bis 3, wobei der Kurbelarm (114) ein Paar von Armabschnitten, die einander zugewandt sind, und einen Kurbelbolzen (112), der die Armabschnitte zusammenkuppelt, enthält, wobei der Abtriebsstab (120) mit dem Kurbelbolzen (112) verbunden ist und wobei, wenn aus einer axialen Richtung des Kurbelwellenteils (111) der Kurbelwelle (110) gesehen wird, ein Abschnitt des Kurbelbolzens (112) mit dem Kurbelwellenteil (111) überlappt.

5. Kupplungsbetätiger nach einem der Ansprüche 1 bis 4, außerdem aufweisend eine Unterstützungsfeder (130), verbunden mit dem Kurbelarm (114), wobei die Unterstützungsfeder die Rotation der Kurbelwelle (110) unterstützt.

6. Kupplungsbetätiger nach einem der Ansprüche 1 bis 5, wobei ein Ende des Kurbelwellenteils (111) der Kurbelwelle (110) durch das erste Lager (117) auskragend gelagert ist und wobei das Schneckenrad mit diesem auskragend gelagerten Ende des Kurbelwellenteils (111) der Kurbelwelle (110) verbunden ist.

7. Kupplungsbetätiger nach einem der Ansprüche 1 bis 3, **gekennzeichnet durch** einen Rotationswinkelsensor (S3), der einen Rotationswinkel der Kurbelwelle (110) erfasst.

8. Kupplungsbetätiger nach einem der Ansprüche 1 bis 7, wobei das zweite Lager (118) einen kleineren Durchmesser als das erste Lager (117) hat.

9. Motoreinheit, aufweisend einen Motor, eine Kupplung, die die Übertragung der Antriebskraft des Motors außer Eingriff oder in Eingriff bringt; und einen Kupplungsbetätiger nach einem der Ansprüche 1 bis 8.

10. Motorrad mit einer Motoreinheit nach Anspruch 9.

## Revendications

1. Actionneur d'embrayage (60) pour débrayer et embrayer un motocycle, ledit actionneur d'embrayage comprenant :
un moteur (60a) ;
un arbre de vis sans fin (103) qui tourne avec le moteur (60a) ;
une roue de vis sans fin (105) qui s'engrène avec l'arbre de vis sans fin (103) ;
un vilebrequin (110), ledit vilebrequin (110) ayant un élément de vilebrequin (111) qui tourne selon la rotation de la roue à vis sans fin (105), et un bras de manivelle (114) qui est prévu sur l'élément de vilebrequin (111) à une certaine distance de la roue à vis sans fin (105) ; et
une tige de sortie (120) fixée au bras de manivelle,
dans lequel l'élément de vilebrequin (111) du vilebrequin (110) est supporté par un premier roulement (117) prévu entre la roue à vis sans fin (105) et le bras de manivelle (114) et il est prévu un second roulement (118) qui supporte le vilebrequin (110), dans lequel le second roulement (118) est disposé de telle sorte que le bras de manivelle (114) soit positionné entre le premier roulement (117) et le second roulement (118).

2. Actionneur d'embrayage selon la revendication 1, dans lequel la roue à vis sans fin (105) est fixée à l'élément de vilebrequin (111) du vilebrequin (110) de telle sorte que la roue à vis sans fin (105) soit coaxiale avec l'élément de vilebrequin (111) du vilebrequin (110) et soit parallèle au bras de manivelle (114).

3. Actionneur d'embrayage selon la revendication 1 ou 2, dans lequel le premier roulement (117) et/ou le second roulement (118) sont respectivement des roulements à billes.

4. Actionneur d'embrayage selon une des revendications 1 à 3, dans lequel le bras de manivelle (114) comprend une paire de sections de bras positionnées en face à face, et un maneton (112) qui accouple les sections de bras, dans lequel la tige de sortie (120) est fixée au maneton (112), et dans lequel, lorsqu'elle est visualisée depuis une direction axiale de l'élément de vilebrequin (111) du vilebrequin (110), une section du maneton (112) chevauche l'élément de vilebrequin (111).

5. Actionneur d'embrayage selon une des revendications 1 à 4, comprenant en outre un ressort d'assistance (130), fixé au bras de manivelle (114), dans lequel le ressort d'assistance assiste la rotation du vilebrequin (110).

6. Actionneur d'embrayage selon une des revendications 1 à 5, dans lequel une extrémité de l'élément de vilebrequin (111) du vilebrequin (110) est supportée en porte-à-faux par le premier roulement (117), et dans lequel la roue à vis sans fin est fixée à cette extrémité supportée en porte-à-faux de l'élément de vilebrequin (111) du vilebrequin (110).

7. Actionneur d'embrayage selon une des revendications 1 à 3, **caractérisé par** un capteur d'angle de rotation (S3) qui détecte un angle de rotation du vilebrequin (110).

8. Actionneur d'embrayage selon une des revendications 1 à 7, dans lequel le second roulement (118) a un diamètre plus petit que le premier roulement (117).

9. Ensemble moteur comprenant un moteur, un embrayage qui engage et supprime la transmission d'une force d'entraînement du moteur, et un actionneur d'embrayage selon une des revendications 1 à 8.

10. Moto comprenant l'ensemble moteur selon la revendication 9.
